# EUROPEAN PATENT APPLICATION

(11) **EP 2 658 219 A2**
(43) Date of publication of application: **30.10.2013**
(21) Application number: 13165593.8
(22) Date of filing: 26.04.2013
(51) Int. Cl.: H04M 1/00

(54) **Communication service management system and operation method for the same**

(30) Priority: 27.04.2012 KR 20120044795
(71) Applicant: Samsung Electronics Co., Ltd, Gyeonggi-do 443-742 (KR)
(72) Inventor: Jeon, Changmin, 443-742 Gyeonggi-do (KR); Kim, Doyeon, 443-742 Gyeonggi-do (KR); Jeon, Seungyoung, 443-742 Gyeonggi-do (KR)
(74) Representative: Gover, Richard Paul

(57) **Abstract**

Management of communication services is performed by a communication service management system and operation method for the same. The communication service management system includes: a first device arranged to support communication services; a second device arranged to connect to the first device, to receive a communication service event from the first device, and to output the received communication service event to control the communication services of the first device; and an access point arranged to interconnect the first device and second device.

## Description

### BACKGROUND OF THE INVENTION

### 1. Field of the Invention

The present invention relates to communication service operations for user terminals. More particularly, certain embodiments of the present invention relate to a communication service management system and operation method for the same that enable, when an event occurs during communication service operation of a first device, a second device to detect and handle the event having occurred in the first device.

### 2. Description of the Related Art

Mobile terminals, which can support specific user functions and are small enough to be portable, are widely used in business and daily life. Mobile terminals introduced in the prior art can support various user functions in an integrated way. Such a mobile terminal executing a user function provides a screen corresponding to the user function on a display unit. Hence, the user may enjoy content through the screen while executing a desired user function.

Among many functions supported by a mobile terminal and other types of terminals, a communication function is used in various fields. Many users buy mobile communication terminals supporting such a communication function to utilize call-related services with other users in an instant and convenient manner. However, in most cases, mobile communication terminals are designed to have a display unit with a limited size so as to support mobility. Hence, existing mobile communication terminals tend to impose restrictions on the use of a communication function owing to limited screen sizes. For example, a user carrying an existing mobile communication terminal may experience difficulty in entering characters, screen control or content viewing.

On the other hand, many people use advanced computing devices to check and perform business activities. In particular, business computing devices, which are used for speedy handling of business activities, provide a keyboard having a number of keys, a mouse configured to conform to the hand, and a large screen. A user utilizing such a computing device may rapidly perform a business activity or a content control operation. However, a user may experience difficulty in handling a mobile communication terminal in the course of using a computing device. That is, when the user uses the computing device to perform a business activity, as the mobile communication terminal is placed at a separate location, the user may be unable to immediately identify and handle a communication service event occurring at the mobile communication terminal. In other words, when a user utilizing a computing device to perform a business activity has to handle a communication event occurring at a mobile communication terminal, the user may experience difficulty in properly managing the mobile communication terminal.

### SUMMARY OF THE INVENTION

Embodiments of the present invention have been made in view of the above problems. It is an aim of certain embodiments of the present invention to provide a communication service management system and operation method for the same wherein management of a first device supporting a communication function is performed by a second device so that a user may obtain various information on the first device and process the information in a speedy and easy manner.

According to a first aspect of the present invention, there is provided a communication service management system comprising: a first device arranged to support communication services; a second device arranged to connect to the first device, to receive a communication service event from the first device, and to output the received communication service event to control the communication services of the first device; and an access point arranged to interconnect the first and second devices.

According to a second aspect of the present invention, there is provided an operation method for a communication service management system, comprising: connecting a first device supporting communication services to a second device through an access point; sending, by the first device, a communication service event to the second device; and receiving, by the second device, the communication service event from the first device; and outputting, by the second device, the received communication service event to control the communication services of the first device.

According to one embodiment, the present invention discloses an operation method for a communication service management system, including: directly connecting a first device to a second device through a wireless access point; sending, by the first device, a communication service event to the second device, or receiving, by the first device, at least one of data for message transmission and a control event controlling transmission of the data, and a function control event for controlling a function of the first device from the second device; and conducting, by the first device, event processing by creating and sending a message according to the data and control event or by performing a function according to the function control event, or notifying, by the second device, reception of the communication service event from the first device.

According to another embodiment, the present invention discloses a communication service management system, including: a first device supporting communication services; a second device having a communication connection to the first device, and receiving a communication service event from the first device and outputting the received communication service event; and a wireless access point placed between the first device and second device and directly interconnecting the first device and second device.

According to certain embodiments of the present invention described above, the communication service management system and operation method for the same enable, when an event occurs in the first device, the second device to directly identify and manage the event.

Hence, in accordance with certain embodiments of the present invention, the user may handle a communication function of the first device in a speedy and timely manner in response to a communication event or a state event occurring in the first device.

Additionally, in accordance with certain embodiments of the present invention, the second device can provide the first device with data for handling a communication event and a control event for controlling a specific user function. Hence, the user may control and execute a user function of the first device in a rapid way.

Another aspect of the invention provides a computer program comprising instructions arranged, when executed, to implement a method in accordance with any one of the above-described aspects. A further aspect provides machine-readable storage storing such a program.

### BRIEF DESCRIPTION OF THE DRAWINGS

The above and other features and advantages of the present invention will become more apparent by describing in detail exemplary embodiments thereof with reference to the attached drawings in which:
FIG. 1 illustrates an overall architecture of a communication service management system according to an exemplary embodiment of the present invention.
FIG. 2 illustrates a configuration of a first device shown in FIG. 1.
FIG. 3 illustrates a detailed configuration of a control unit in the first device of FIG. 2.
FIG. 4 illustrates a configuration of a second device shown in FIG. 1.
FIG. 5 illustrates a detailed configuration of a control unit in the second device of FIG. 4.
FIG. 6 illustrates a system operation method for handling a call connection request received during communication service management according to the exemplary embodiment of the present invention.
FIG. 7 illustrates screen representations for handling a call connection request received during communication service management according to the exemplary embodiment of the present invention.
FIGS. 8A-8F illustrate screen representations on a display unit of the second device according to the present invention.
FIG. 9 illustrates a system operation method for handling data and control events related to a message received during communication service management according to the exemplary embodiment of the present invention.
FIG. 10 illustrates screen representations output during system operation of FIG. 9.
FIG. 11 illustrates a system operation method for handling data and control events during communication service management according to the exemplary embodiment of the present invention.
FIG. 12 illustrates screen representations output during system operation of FIG. 11.
FIG. 13 illustrates a system operation method for handling events related to call log control during communication service management according to the exemplary embodiment of the present invention.
FIG. 14 illustrates screen representations output during system operation of FIG. 13.
FIG. 15 illustrates a system operation method for handling control events related to a search function during communication service management according to the exemplary embodiment of the present invention.
FIG. 16 illustrates screen representations output during system operation of FIG. 15.
FIG. 17 illustrates a system operation method for handling control events related to phonebook data during communication service management according to the exemplary embodiment of the present invention.
FIG. 18 illustrates screen representations output during system operation of FIG. 17.
FIGS. 19A-19B illustrate various tray icons according to the present invention.

### DETAILED DESCRIPTION OF THE INVENTION

Hereinafter, embodiments of the present invention are described in detail with reference to the accompanying drawings.

Detailed descriptions of well-known functions and structures incorporated herein may be omitted to avoid obscuring the subject matter of the present invention. Detailed descriptions of components having substantially the same configurations and functions may also be omitted.

In the drawings, some elements may be exaggerated, omitted or only outlined in brief, and thus may not be drawn to scale. Hence, the present invention is not limited by relative sizes of objects and intervals between objects in the drawings. The present invention may, however, be embodied in many different forms and should not be construed as limited to the exemplary embodiments set forth herein. In addition, terms described herein, which are defined with reference to the functions of the present invention, may be implemented differently depending on a user or operator's intention and practice. Therefore, the terms should be understood on the basis of the disclosure throughout the specification. The principles and features of this invention may be employed in varied and numerous embodiments without departing from the scope of the invention. The same reference numbers are used throughout the drawings to refer to the same or like parts.

Among the terms set forth herein, a terminal refers to any kind of device capable of processing data which is transmitted or received to or from any external entity. The terminal may display icons or menus on a screen to which stored data and various executable functions are assigned or mapped. The terminal may include a computer, a notebook, a tablet PC, a mobile device, and the like.

Among the terms set forth herein, a screen refers to a display or other output devices which visually display information to the user, and which optionally are capable of receiving and electronically processing tactile inputs from a user using a stylus, a finger of the user, or other techniques for conveying a user selection from the user to the output devices.

Among the terms set forth herein, an icon refers to a graphical element such as a figure or a symbol displayed on the screen of the device such that a user can easily select a desired function or data. In particular, each icon has a mapping relation with any function being executable in the device or with any data stored in the device and is used for processing functions or selecting data in the device. When a user selects one of the displayed icons, the device identifies a particular function or data associated with the selected icon. Then the device executes the identified function or displays the identified data.

Among the terms set forth herein, data refers to any kind of information processed by the device, including text and/or images received from any external entities, messages transmitted or received, and information created when a specific function is executed by the device.

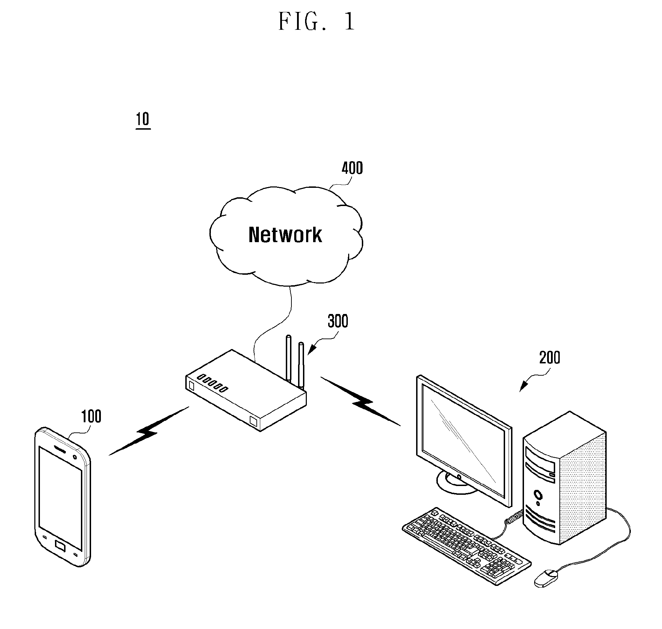

FIG. 1 illustrates an overall architecture of a communication service management system according to an exemplary embodiment of the present invention.

Referring to FIG. 1, the communication service management system 10 according to the exemplary embodiment of the present invention may include a first device 100, a second device 200, an access point 300, which may be a wireless access point, connecting the first device 100 and the second device 200, and a network 400 controlling the access point 300. Through the access point 300, the devices 100, 200 may be directly connected. In the illustrative embodiments described herein, for example, the access point 300 is a wireless access point, and the devices 100, 200 communicate wirelessly. However, alternative embodiments may implement the communications between the devices 100, 200 and the access point with wired and/or wireless communications.

In the communication service management system 10 of the present invention having the above configuration, the first device 100 may establish a communication channel to the second device 200 through the wireless access point 300 and transfer a specific event to the second device 200. In particular, the communication service management system 10 enables the second device 200 to identify and handle a specific event that occurs in the first device 100 in relation to a voice call, video call, text message or instant message. Additionally, in the communication service management system 10, the second device 200 may send the first device 100 a control event for identifying and controlling a specific function provided by the first device 100, and the first device 100 may perform a function indicated by the received event and send processing results to the second device 200. Here, the second device 200 may output or process in real-time communication-service-related events or state related events and data provided by the first device 100 and optionally without storing the same, except possibly by transitory storage of such events and data during the outputting or processing. The second device 200 uses a tray icon to notify the user of an event occurring in the first device 100, so that the working environment in the second device 200 is not significantly disturbed or affected, if at all.

To achieve this, the wireless access point 300 is configured to establish a communication channel between the first device 100 and the second device 200. In particular, the wireless access point 300 enables the first device 100 and the second device 200 to send and receive events and associated data for event processing in the present invention. The wireless access point 300 may include various communication units to support communication methods in accordance with the functional capacities and capabilities of the first device 100 and second device 200. For example, the wireless access point 300 may include a Wi-Fi communication module, being a communication module using a wireless technology for data exchange over a computer network, commercially available from the Wi-Fi Alliance, to establish a Wi-Fi channel between the first device 100 and second device 200. The wireless access point 300 is connected to the network 400, and may form a link connection between the first device 100 and second device 200 under control of the network 400. The wireless access point 300 may include a microprocessor to maintain a history record of channel establishment between the first device 100 and second device 200, and support establishment of a communication channel there between on the basis of the history record. In response to a request from the second device 200, the wireless access point 300 may provide identification information of a currently connected first device 100 to the second device 200. Thereafter, when the second device 200 sends authentication information for communication channel establishment with the first device 100, the wireless access point 300 may support establishment of a communication channel between the first device 100 and second device 200. As described above, channel establishment control may be performed by the network 400, and the wireless access point 300 may transfer corresponding control signals to the network 400.

The network 400 is configured to control the wireless access point 300. The network 400 supports establishment of communication channels for the first device 100 and second device 200 connected through the wireless access point 300 and supports management of terminal specific information and connection history records. The network 400 enables the first device 100 and second device 200 to access a specific server for sending and receiving files. The network 400 may provide the wireless access point 300 with information needed to establish a communication channel between the first device 100 and second device 200. That is, the network 400 may maintain a list of terminal specific information regarding first devices connected to the wireless access point 300, and may provide the list to a second device 200 upon request. The network 400 may manage or redistribute radio resources according to a connection release of the first device 100 and second device 200.

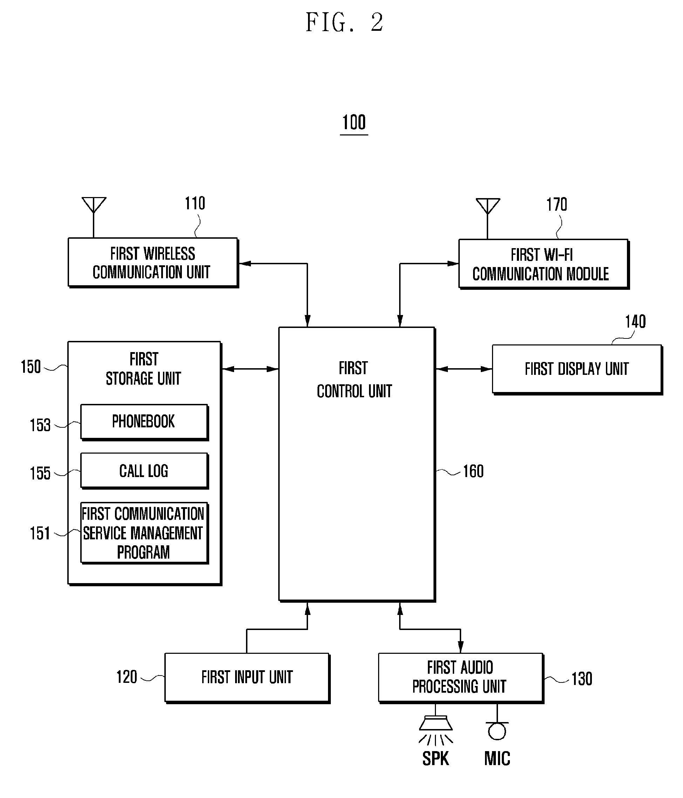

The first device 100 is configured to support communication services. For example, the first device 100 may support a mobile communication function in cooperation with a base station. To achieve this, the first device 100 includes a communication module to support communication services, and generates an event corresponding to reception of a call connection request, text or instant message, or file from another terminal. To transfer such an event to the second device 200, the first device 100 may establish a communication channel to the second device 200 through the wireless access point 300. Under control of the second device 200, the first device 100 may find, access, or otherwise obtain specific information such as phonebook (contact address) information, call log information and file data from a storage unit and send the found, accessed, or obtained information to the second device 200. The first device 100 may be a mobile terminal supporting mobile communications. The first device 100 is described in more detail later in terms of its components and their functions with reference to FIG. 2.

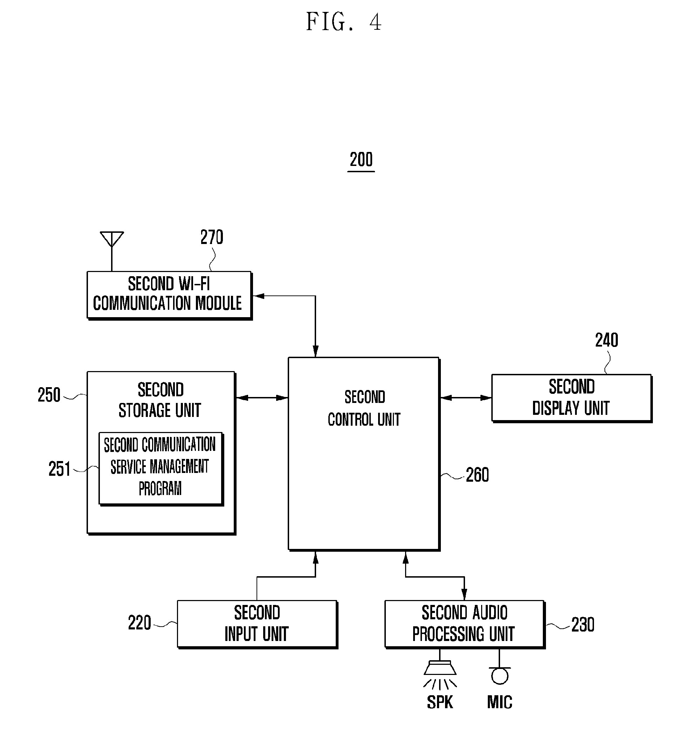

The second device 200 may establish a communication channel to the first device 100 through the wireless access point 300 and output an event provided by the first device 100 through an output device such as a display unit or audio processing unit. The second device 200 may generate data for handling an event having occurred in the first device 100 and send the data to the first device 100. The second device 200 may control the first device 100 to perform a specific function by providing various events thereto, and receive processing result data from the first device 100 and output the received result data. Here, the second device 200 may output a tray icon of a given size on a portion of a screen of a display unit of the second device 200, and the tray icon is used to continuously maintain the communication channel to the first device 100 and to notify the user or other devices or entities of events received through the communication channel. The second device 200 may be one of various known terminals such as a personal computer (PC), a notebook computer, a laptop computer, a slate PC, a tablet PC, TV, monitor and a portable large-screen terminal. The configuration of the second device 200 is described in more detail with reference to FIG. 4.

As described above, the communication service management system 10 according to the exemplary embodiment of the present invention enables the second device 200 to manage and process events occurring in the first device 100 supporting communication services related particularly to a call or text message. Hence, the user may identify and handle events occurring in the first device 100 while using the second device 200 to perform a task or activity. In particular, in the communication service management system 10, the second device 200 outputs a notification as to an event or data from the first device 100 in a limited size or in a form indicated by the tray icon, so that information management as to the first device 100 may be performed without significantly distracting or affecting the user, if at all.

FIG. 2 illustrates a configuration of the first device 100 according to the exemplary embodiment of the present invention.

Referring to FIG. 2, the first device 100 of the present invention may include a first wireless communication unit 110, a first input unit 120, a first audio processing unit 130, a first display unit 140, a first storage unit 150, a first control unit 160, and a first Wi-Fi communication module 170.

The first device 100 having the above configuration may receive an event related to a communication service through the first wireless communication unit 110 and transfer the received event to the second device 200. Here, to transfer a communication service event, the first device 100 establishes a communication channel to the second device 200 through the first Wi-Fi communication module 170. The first device 100 may receive data for handling a communication service event and a control event for controlling a supported user function from the second device 200 through the first Wi-Fi communication module 170. When data for handling a communication service event or a function control event is received from the second device 200, the first device 100 may perform an operation corresponding to the received data or function control event and send operation results to the second device 200.

To achieve this, the first wireless communication unit 110 is used to establish a communication channel to support communication services of the first device 100. For example, the first wireless communication unit 110 may establish a communication channel to a base station supporting mobile communication services. The first wireless communication unit 110 may receive a connection request for a voice or video call, a text message, an instant message or a file destined for the first device 100 from another device via the base station. To support communication services, the first wireless communication unit 110 may include a mobile communication module supporting 2G, 3G or 4G mobile communications based on TDMA, CDMA, WCDMA, FDMA or OFDMA technology, a communication module based on a wired and/or wireless network, or any other known communication module capable of receiving a communication service event from another device. Under control of the first control unit 160, the first wireless communication unit 110 may send to another device a rejection message, a response message for a call connection request, a text message or an instant message, which is provided by the second device 200.

The first input unit 120 is configured to generate various input signals for operation of the first device 100. The first input unit 120 may be composed of specific keys such as a button key, a side key and a home key, or include a touch keypad to support a full touch screen capability. Here, the touch keypad may be displayed on the first display unit 140 so as to generate an input signal corresponding to a user touch. According to user control, the first input unit 120 may generate an input signal for connecting to the wireless access point 300, an input signal for disconnecting from the wireless access point 300, an input signal for activating a communication service management application supporting communication service management of the present invention, and an input signal for deactivating the communication service management application. When the communication service management application is activated, the first device 100 may connect to the wireless access point 300 through an automatic search in the vicinity thereof. The generated input signal may be sent to the first control unit 160 and may be used as a command for activating a corresponding function.

The first audio processing unit 130 is used to collect and process audio signals for operation of the first device 100. To achieve this, the first audio processing unit 130 may include a speaker (SPK) to output an audio signal and a microphone (MIC) to collect an audio signal. The first audio processing unit 130 may output a sound notification indicating connection to or disconnection from the wireless access point 300, a sound notification indicating occurrence of a communication service event, a sound notification indicating successful forwarding of a communication service event to the second device 200, a sound notification indicating reception of data for handling a communication service event from the second device 200, and a sound notification indicating reception of an event for controlling a user function from the second device 200. Output of a sound notification may be skipped or not performed according to user settings.

The first Wi-Fi communication module 170 is a communication module enabling the first device 100 to connect to the wireless access point 300. The first Wi-Fi communication module 170 may have unique information to connect to the wireless access point 300 authenticated in advance. The first Wi-Fi communication module 170 may establish a communication channel to the wireless access point 300 and send a communication service event to the second device 200 through the wireless access point 300. The first Wi-Fi communication module 170 may receive data, which is created by the second device 200 for the communication service event, from the second device 200, and receive a control event, which is used to control a function provided by the first device 100, from the second device 200. The data and control event received from the second device 200 may be forwarded to the first control unit 160.

The first display unit 140 may output various screens for operation of the first device 100. The first display unit 140 may be composed of a touch panel and display panel to support touch functionality. The first display unit 140 may output a screen for guiding the user to control the first device 100 for connection to and disconnection from the wireless access point 300, a screen indicating reception of a communication service event from another device, and a screen for transferring a communication service event to the second device 200. The first display unit 140 may output a screen for processing data provided by the second device 200 to handle a communication service event, a screen for processing a control event provided by the second device 200, a screen for executing a supported user function corresponding to a function control event provided by the second device 200, and a screen for delivering processing results to the second device 200. For example, under control of the second device 200, the first display unit 140 may output a screen for searching a call log, a screen for performing a search using a search word provided by the second device 200, and a screen for receiving new contact information from the second device 200 and adding the new contact information to a phonebook. The first display unit 140 may output other interface screens necessary for communication service management of the present invention.

The first storage unit 150 may store various application programs necessary to support operations and functions of the first device 100. For example, the first storage unit 150 may store data, software applications, and an operating system for operation of the first device 100, a call support program for executing a call connection, a video call support program for executing a video call connection, and a server access program for accessing an external server. In particular, the first storage unit 150 may store a first communication service management program 151 to support communication service management of the present invention.

The first communication service management program 151 is a program that supports communication service management of the present invention. When the user of the first device 100 activates the communication service management function, the first communication service management program 151 is loaded into the first control unit 160 for communication service management. The first communication service management program 151 may include a routine for controlling a connection to the wireless access point 300 according to user control, and a routine for establishing a communication channel to the second device 200 on the basis of a connection request and authentication information from the second device 200. The first communication service management program 151 may include a routine for transferring, when a communication service event occurs, the communication service event to the second device 200, a routine for receiving data needed to process a communication service event from the second device 200 and a control event therefrom, and a routine for executing a function corresponding to the received data and control event. The first communication service management program 151 may include a routine for executing a function of the first device 100 corresponding to a function control event provided by the second device 200, and a routine for disconnecting from the wireless access point 300 in response to a termination request for communication service management. The first communication service management program 151 supports communication service management of the present invention on the basis of the routines described above. Communication service management is described in more detail later with reference to the drawings.

The first storage unit 150 may further store information such as a phonebook 153 and a call log 155. The phonebook 153 may include, for each external device, a telephone number for call connection, and various information about the user of the external device, such as a photograph, name, address and birth date. Under control of the second device 200, new contact information may be added to the phonebook 153 or existing contact information may be deleted from the phonebook 153. The call log 155 is information generated in the course of operation of the first device 100, and may be provided on a search screen according to a request from the second device 200. Under control of the second device 200, some entries of the call log 155 may be deleted or may be displayed in detail on the screen of the first display unit 140. The call log 155 may be updated according to a communication service event received from an external device. The call log 155 may be changed according to user control of the first device 100. In particular, the call log 155 may be changed according to a communication service event processed by the second device 200.

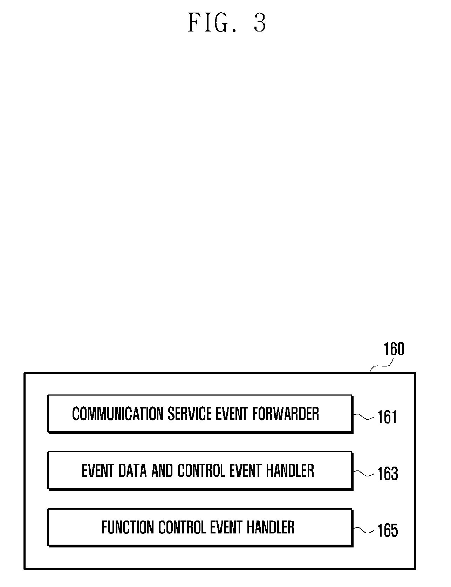

The first control unit 160 controls supply and distribution of power to various devices and components of the first device 100 necessary for operation of the first device 100 and controls signal delivery and processing therefor. In particular, the first control unit 160 may perform various control operations to support communication service management according to the exemplary embodiment of the present invention. To achieve this, the first control unit 160 may have a configuration as shown in FIG. 3.

FIG. 3 illustrates a detailed configuration of the first control unit 160 of the first device according to the exemplary embodiment of the present invention.

Referring to FIG. 3, the first control unit 160 may include a communication service event forwarder 161, an event data and control event handler 163, and a function control event handler 165.

The communication service event forwarder 161 is activated according to activation of the communication service management function of the first device 100. The communication service event forwarder 161 may transfer a communication service event received through the first wireless communication unit 110 to the second device 200, and control the first device 100 to output a screen corresponding to the communication service event. For example, when a call connection request message is received from an external device, the communication service event forwarder 161 may control the first display unit 140 to output a screen corresponding to the call connection request message and control an operation to transfer the call connection request message to the second device 200 through the wireless access point 300.

When the communication service management function is activated, the communication service event forwarder 161 may block or not perform output of a screen or audible notification corresponding to reception of the message. When a text message or an instant message is received from an external device, the communication service event forwarder 161 may control an operation to transfer the received message to the second device 200 through the wireless access point 300. When a file is received from an external device, the communication service event forwarder 161 may control, upon completion of the file reception, an operation to send a message indicating file reception completion to the second device 200. Here, the communication service event forwarder 161 may control an operation to transfer the received file to the second device 200 through the wireless access point 300.

The event data and control event handler 163 processes data and control events received from the second device 200. That is, after the communication service event forwarder 161 transfers a communication service event to the second device 200, when the second device 200 sends data and a control event for processing a corresponding communication service, the event data and control event handler 163 may perform a communication function according to the received data and control event.

For example, when a control event requesting data reception and transmission for a call connection request message is received from the second device 200, the event data and control event handler 163 may control an operation to send an external device a message containing data, which is received as a response to the call connection request message from the second device 200. In this process, the event data and control event handler 163 may initiate call forwarding to a pre-set phone number or call waiting for the call connection request message. After a text message or instant message is transferred to the second device 200, when the text message or instant message is received by the second device 200, the event data and control event handler 163 may forward the received text message or instant message to an external device.

The function control event handler 165 controls an operation to perform a function of the first device 100 according to a function control event sent by the second device 200. For example, when a function control event requesting a search for a call log or phonebook is received from the second device 200, the function control event handler 165 may control an operation to read the call log 155 or phonebook 153 from the first storage unit 150 and to send a call-log or phonebook output screen to the second device 200. Here, the function control event handler 165 may control an operation to output the call log 155 or phonebook 153 on the first display unit 140 or to skip or not perform outputting the same according to user settings.

When a function control event requesting addition of new contact information is received from the second device 200, the function control event handler 165 may control an operation to add received new contact information to the phonebook 153 stored in the first storage unit 150. Here, the function control event handler 165 may output a notification as to the contact information addition and the updated phonebook 153 on the first display unit 140 or skip or not perform outputting the same according to user settings. After completion of updating the phonebook 153, the function control event handler 165 may control an operation to send a notification message for phonebook update completion to the second device 200. Additionally, upon reception of a function control event demanding activation of a function from the second device 200, the function control event handler 165 may control an operation to execute a function indicated by the function control event and to send the execution results to the second device 200.

The function control event handler 165 may send state information of the first device 100 to the second device 200. Specifically, the function control event handler 165 may provide the second device 200 with state information of the first device 100, including at least one of information regarding received messages such as a text message, a multimedia message, an email message and an instant message, information on remaining battery power, information on an operation state of a short-range communication module, information on an operation state of a location information collection sensor, state information of communication functions, and state information of running user programs such as a music file player.

As described above, in the exemplary embodiment of the present invention, the first device 100 is connected to the second device 200 in a one-to-one manner through the wireless access point 300. When a communication service event occurs, the first device 100 sends the communication service event to the second device 200 and performs a communication service management function corresponding to data and a control event received from the second device 200. Hence, the user may use the second device 200 to execute a communication service function or a desired function of the first device 100 without directly manipulating the first device 100.

FIG. 4 illustrates a configuration of the second device 200 according to the exemplary embodiment of the present invention.

Referring to FIG. 4, the second device 200 may include a second Wi-Fi communication module 270, a second input unit 220, a second audio processing unit 230, a second display unit 240, a second storage unit 250, and a second control unit 260.

The second device 200 having the above configuration may use the second Wi-Fi communication module 270 to establish a communication channel to the first device 100 through the wireless access point 300. The second device 200 may receive a communication service event from the first device 100 through the second Wi-Fi communication module 270 and send data and a control event for processing the communication service event to the first device 100. The second device 200 may send the first device 100 a function control event for controlling a specific function of the first device 100, receive execution results of the function indicated by the function control event from the first device 100, and output the received execution results. In particular, the second device 200 may output an event or result data sent by the first device 100 to a tray icon displayed on the second display unit 240. Here, the second device 200 may adjust event data or result data in accordance with the format of the tray icon and output adjusted text, an icon, an image and the like.

As described above, the second Wi-Fi communication module 270 may establish a communication channel to the wireless access point 300 and enables establishment of a one-to-one communication channel with the first Wi-Fi communication module 170 of the first device 100. The second Wi-Fi communication module 270 may be automatically activated according to activation of a menu item associated with the communication service management function of the present invention, and locate the wireless access point 300 by performing a local area search. The second Wi-Fi communication module 270 may receive a list of a plurality of first devices 100 connected to the wireless access point 300 therefrom. Thereafter, the second Wi-Fi communication module 270 may send authentication information for connection to at least one first device 100 of the list and establish a communication channel to the at least one first device 100 after successful authentication.

The second input unit 220 is configured to generate various input signals for operation of the second device 200. The second input unit 220 may include various input devices such as a keyboard, a mouse, a touch pad, a voice inputter, a button key, and a touch key. The second input unit 220 may include a virtual touch map or a virtual keypad, which is output to the second display unit 240 supporting a touch capability for user input of touches and selections using icons or other display elements shown on a touch screen of the second display unit 240. The second input unit 220 may be used as various input devices to process various tasks or activities using the second device 200. In particular, when a communication service event is received from the first device 100, the second input unit 220 may generate an input signal corresponding to data for handling the communication service event and generate an input signal corresponding to a control event demanding or requesting the first device 100 to process the data. The second input unit 220 may generate an input signal corresponding to a function control event for controlling a function provided by the first device 100. The second input unit 220 sends a generated input signal to the second control unit 260, which may use the input signal as a command for communication service management of the present invention.

The second audio processing unit 230 may output an audio signal generated during operation of the second device 200, and collect an audio signal during operation thereof. The second audio processing unit 230 may output various audio signals and sound notifications related to communication service management of the second device 200. For example, the second audio processing unit 230 may output a sound notification indicating connection of the second device 200 to the wireless access point 300, a sound notification indicating completion of the connection to the first device 100, a sound notification indicating reception of a communication service event, a sound notification indicating transmission of data and a control event for the communication service event, and a sound notification indicating ending of communication service management according to stages of the communication service management. Output of a sound notification may be skipped or not performed according to user settings or design decisions, such as default implementation and settings of the second device 200 during fabrication by a manufacturer.

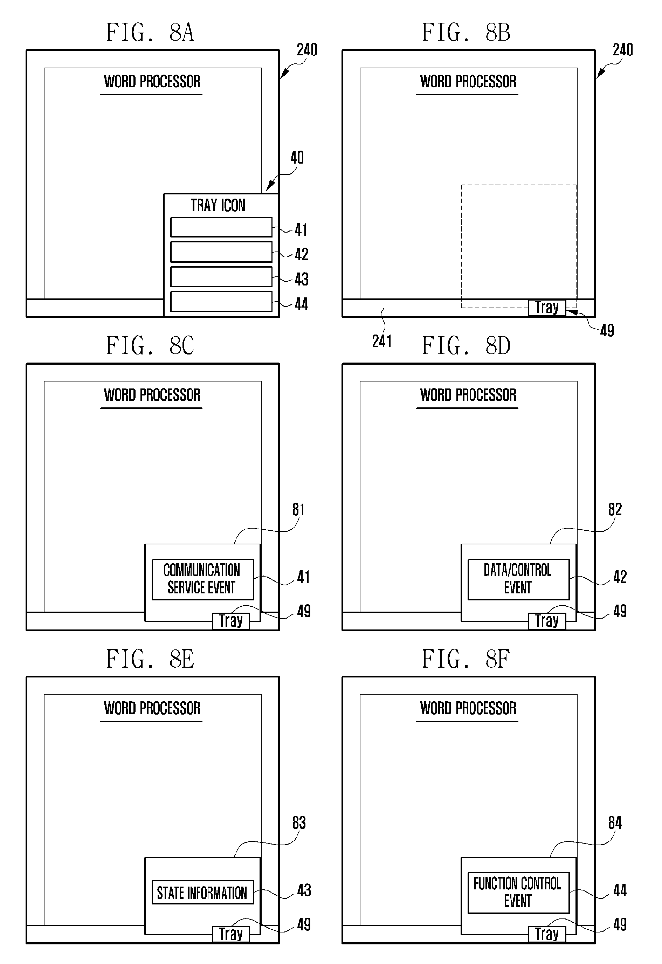

The second display unit 240 outputs various screens generated during operation of the second device 200. For example, the second display unit 240 may output screens for communication service management of the present invention and screens for various tasks and activities processed by the second device 200. In particular, the second display unit 240 may output a tray icon for communication service management operation of the present invention on a portion of the screen. When a communication service management operation is initiated with the first device 100, the tray icon is activated and may be output in a predetermined or default size at, for example, a lower right edge portion of the second display unit 240, such as shown in FIGS. 8, 10, 12, 14, 16, and 18. The tray icon may provide various information related to the communication service management operation of the present invention in the form of text or an image. Various interface screens on the second display unit 240 are described in more detail later with reference to the following drawings.

The second storage unit 250 may store data and an operating system for operation of the second device 200 and application programs supporting various functions of the second device 200. For example, the second storage unit 250 may store a text edit program, an image edit program, a moving image playback program, and a moving image edit program. In particular, the second storage unit 250 may store a second communication service management program 251 supporting communication service management operation of the present invention.

The second communication service management program 251 is a program that supports communication service management operation of the second device 200. The second communication service management program 251 is activated in response to an occurrence of an input event for activating a communication service management operation and loaded onto the second control unit 260 to thereby support various functions for communication service management. For example, the second communication service management program 251 may include a routine for connecting to the wireless access point 300, and a routine for connecting to the first device 100 by providing specific authentication information. The second communication service management program 251 may include a routine for outputting the tray icon to support communication service management operation of the present invention, a routine for processing a communication service event from the first device 100 using the tray icon, and a routine for providing the first device 100 with data and a control event to handle the communication service event. The second communication service management program 251 may include a routine for providing the first device 100 with a function control event generated by the second input unit 220 to request the first device 100 to execute a corresponding function, and a routine for receiving execution results from the first device 100 and outputting the received results.

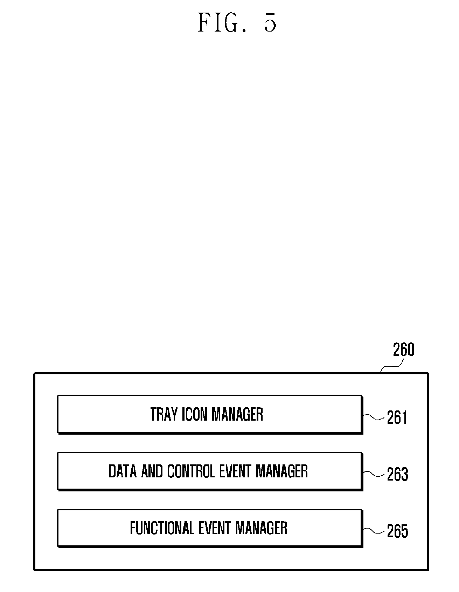

The second control unit 260 controls supply and distribution of power necessary for operation of the second device 200 and controls signal exchange and processing for the communication service management operation of the present invention. To support communication service management, the second control unit 260 may have a configuration as shown in FIG. 5.

FIG. 5 illustrates a detailed configuration of the second control unit 260 in the second device 200 according to the present invention.

Referring to FIG. 5, the second control unit 260 may include a tray icon manager 261, a data and control event manager 263, and a functional event manager 265.

The tray icon manager 261 controls an operation to output a tray icon at a portion of the second display unit 240 when the second device 200 performs communication service management with the first device 100. The tray icon manager 261 outputs various information on the first device 100 to the tray icon, so that the user utilizing the second device 200 may easily check information on the first device 100. For example, the tray icon manager 261 may output a notification message or an image when a communication service event is received from the first device 100 to thereby notify the user of an occurrence of a communication service event in the first device 100. Here, the tray icon is displayed in a limited size on a portion of the second display unit 240 so that the event occurrence in the first device 100 may not excessively distract the user performing a task. The tray icon manager 261 may output at least a portion of data and a control event sent to the first device 100 in the form of text or an image on the tray icon, and output at least a portion of a function control event on the tray icon. The tray icon manager 261 may receive results corresponding to a sent function control event and may output the results on the tray icon. The user may identify states of the first device 100 through the tray icon controlled by the tray icon manager 261, and may select an icon or a functional item on the tray icon to execute a communication service management function, for example, to invoke a message composition screen or to send a rejection message.

The tray icon manager 261 may output state information provided by the first device 100 in a pre-set form of an icon or text. For example, the tray icon manager 261 may output at least one of information regarding received messages such as a text message, a multimedia message, an email message and an instant message, information on remaining battery power, information on an operation state of a short-range communication module, information on an operation state of a location information collection sensor, state information of communication functions, and state information of running user programs such as a music file player which may be provided by the first device 100, on the tray icon. By outputting state information on the first device 100, the tray icon manager 261 may contribute to the prevention of an abrupt discontinuation of the operation of the first device 100 owing to battery discharge through, for example, reminding the user of the need to charge a battery.

The data and control event manager 263 supports generation of data and a control event in response to reception of a communication service event from the first device 100. In particular, when a notification message for the communication service event, output on the tray icon, is selected, the data and control event manager 263 may control an operation to output a menu screen containing items for handling the event or to automatically activate a word processor for handling the event. In response to a send request, the data and control event manager 263 may send the generated data and control event to the first device 100. Thereafter, the first device 100 may compose a message according to the data and control event received from the second device 200 and transmit the message to an external device. Alternatively, the first device 100 may reject a call connection request according to the data and control event received from the second device 200.

The functional event manager 265 generates a function control event for executing a function of the first device 100 and sends the function control event to the first device 100 according to an communication service management operation after a connection to the first device 100 is established. To achieve this, the functional event manager 265 may provide the user with a list of available functions of the first device 100 and initiate an editor to generate a function control event for controlling a function selected from the list. The user may use the editor on the second device 200 to generate a function control event for controlling a function provided by the first device 100.

As described above, in the present invention, the second device 200 may receive a notification for activation of a function from the first device 100 as an event and output the event to thereby provide information for managing the first device 100 to the user without separate storage of data on the first device 100. Here, as the second device 200 does not directly store data on the first device 100 such as a call log, a phonebook or other data or storage structures such as a file, the second device 200 may not be required to perform additional memory allocation, improving memory usage efficiency. Interaction between the second device 200 and first device 100 may be accomplished on the basis of the known HTTP request/response model, and a new application programming interface (API) may be defined to support a communication service management operation of the present invention. The new API may be contained in the communication service management programs of the first device 100 and the second device 200 and may be invoked to support the above-described functions after activation of a communication service management operation.

Hereinabove, a description has been given of the system and components thereof supporting communication service management according to the exemplary embodiment of the present invention. Next, a detailed description is given of a system operation method supporting communication service management of the present invention with reference to the drawings.

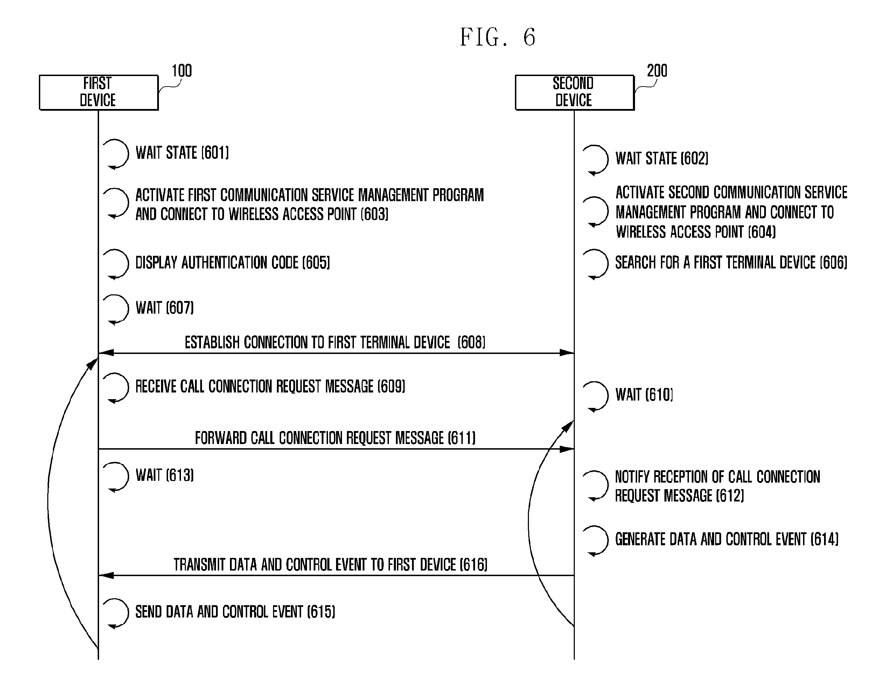

FIG. 6 is a sequence diagram for handling a call connection request during a communication service management operation according to the exemplary embodiment of the present invention.

Referring to FIG. 6, in a system operation method for handling a call connection request during communication service management of the present invention, the first device 100 and second device 200 remain in a wait state or perform user functions, respectively, according to user control in steps 601 and 602. For example, the first device 100 may perform a file playback, and the second device 200 may execute a word processor to generate a document according to input signals.

Thereafter, the first device 100 activates the first communication service management program 151 and connects to the wireless access point 300 according to a user control in step603, and the second device 200 activates the second communication service management program 251 and connects to the wireless access point 300 according to the user control in step 604. Here, activation times of the first communication service management program 151 and second communication service management program 251 may be the same or may be different.

After connecting to the wireless access point 300, the first device 100 outputs authentication information on the first display unit 140 to make a connection to the second device 200 in step 605. Here, the authentication information may be needed for the second device 200 to establish a connection to the first device 100. After connecting to the wireless access point 300, the second device 200 performs a search for a first device 100 to connect to the first device 100 in step 606.

The first device 100 displays the authentication information and may enter a wait state for the communication service management operation in step 607, and the second device 200 makes a communication connection to the first device 100 after the search is completed in step 608. The second device 200 may enter a wait state for the communication service management operation in step 610. In this wait state, whereas the communication service management operation is suspended, a different function such as a word processing function may be executed.

During the wait state for the communication service management operation, the first device 100 may receive a call connection request message in step 609. The first device 100 forwards the received call connection request message through the wireless access point 300 to the second device 200 in the wait state for the communication service management operation in step 611. The second device 200 outputs a notification indicating reception of the call connection request message in step 612. Here, the second device 200 may use the tray icon to output text or a message corresponding to the call connection request message from at least one portion of the second display unit 240. The first device 100 may enter the wait state for the communication service management operation after forwarding the call connection request message to the second device 200 in step 613.

The second device 200 generates data and a control event for the received call connection request message in step 614. Here, the data and control event may be used for rejecting the call connection request or for writing and sending a response message. The second device 200 sends the generated data and control event to the first device 100 in step 616.

When the data and control event are received from the second device 200, the first device 100 sends a message corresponding to the received data and control event to an external device in step 615. For example, the first device 100 may send a rejection message or a message from the second device 200 to the external device. Thereafter, the first device 100 returns to step 609 and continues processing data and communication signals until an input signal for terminating the communication service management is generated.

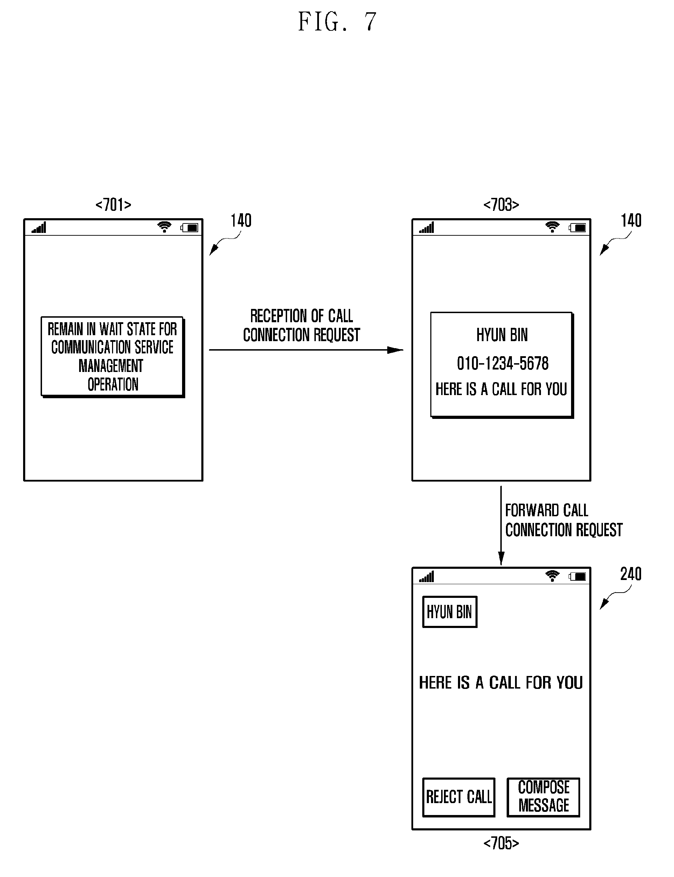

FIG. 7 illustrates examples of screen representations for supporting communication service management described above.

Referring to FIG. 7, the first device 100 may remain in the wait state after initiation of communication service management operation as shown by screen 701 in the first display unit 140. When a communication service event such as a call connection request message is received in the wait state, the first device 100 may output a screen notifying the user of reception of a call connection request message as shown by screen 703 in the first display unit 140.

When the first device 100 forwards the call connection request message to the second device 200, the second device 200 may output a notification screen for the call connection request message received from the first device 100 as shown by screen 705 in the second display unit 240. Here, to support communication service management, the second device 200 may output a tray icon 40 in a portion of the screen as shown in FIGS. 8A-8F.

Referring to FIGS. 8A-8F, the tray icon 40 may be output in a default or predetermined region on the second display unit 240, which may be repositioned according to user settings and/or user selections. As shown by screen 801 in FIG. 8A, the tray icon 40 may include at least one of an event region 41 to notify the user of the occurrence of a communication service event, a data and control event region 42, a state information region 43 to output state information of the first device 100, and a function control event region 44 to handle a function control event.

In an alternative embodiment, the tray icon may be output as a tray base icon 49 in a portion of a task bar 241 on the second display unit 240 as shown by screen 803 in FIG. 8B. When the tray base icon 49 is selected by the user, the tray base icon 49may be changed into an extended icon containing at least one of the regions 41-44 shown by screen 801 in FIG. 8A. When an event is received from the first device 100 while the tray base icon 49 is displayed on the task bar 241, the tray base icon 49 may be changed into an extended icon containing a corresponding region such as any or all of the regions 41-44 shown by screen 801 in FIG. 8A, or alternative extended icons as described herein.

For example, when the second device 200 receives a communication service event from the first device 100, the tray icon 40 may be changed into a first tray extended icon 81 containing the event region 41 as shown by screen 805 in FIG. 8C. In another example, when the user using the second device 200 selects an item for handling the communication service event, the tray icon 40 may be changed into a second tray extended icon 82 containing the data and control event region 42 as shown by screen 807 in FIG. 8D. Here, the data and control event region 42 may be a message composition screen in which a message to be sent to an external device can be composed. Through the data and control event region 42, the user may compose a message to be sent to an external device or control transmission of a rejection message for a call connection request message.

In a further example, when state information is received from the first device 100, the tray icon 40 may be changed into a third tray extended icon 83 containing the state information region 43 for displaying the state information in a form of text or image as shown by screen 809 in FIG. 8E. Here, the third tray extended icon 83 may be used to display at least one of information regarding received messages such as a text message, a multimedia message, an email message and an instant message, information on remaining battery power, information on an operation state of a short-range communication module, information on an operation state of a location information collection sensor, state information of communication functions, and state information of user programs running on the first device 100 such as a music file player. In another example, when a user request for a function control event is issued in the second device 200, the tray icon 40 may be changed into a fourth tray extended icon 84 containing the function control event region 44 as shown by screen 811 in FIG. 8F. The fourth tray extended icon 84 may be included in the tray icon 40 by default to support a specific user function. For example, the fourth tray extended icon 84 may be presented in a form so as to support functions for a call log search, a phonebook search, and phonebook entry addition and deletion in the first device 100.

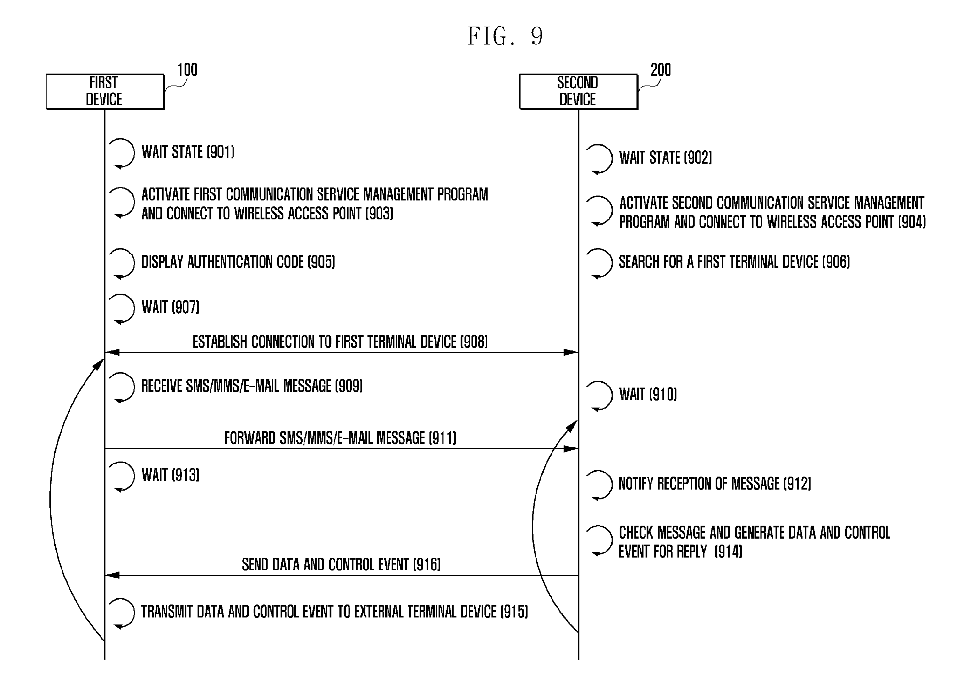

FIG. 9 illustrates a system operation method for handling a message received during communication service management according to an exemplary embodiment of the present invention.

Referring to FIG. 9, in the system operation method for communication service management of the present invention, the first device 100 and second device 200 remain in a wait state or perform user functions respectively in steps 901 and 902. Thereafter, the first device 100 activates the first communication service management program 151 in response to a request and connects to the wireless access point 300 in step 903. The first device 100 outputs authentication information on the first display unit 140 to establish a connection to the second device 200 in step 905. The first device 100 displays the authentication information and may enter a wait state for the communication service management operation in step 907.

The second device 200 activates the second communication service management program 251 in response to a request and connects to the wireless access point 300 in step 904. The second device 200 performs a search for the first device 100 in step 906, and makes a communication connection to the first device 100 by providing the authentication information to the first device 100 after the search is completed in step 908. Here, when multiple first devices 100 are found, the second device 200 may provide a list of the found first devices 100 for selection. Terminal specific information such as a telephone number may be used to select a first device100 from the list. In the above description, the user identifies authentication information displayed by the first device 100 and enters the identified authentication information to the second device 200 attempting to connect to the first device 100. However, the present invention is not limited thereto. That is, when the second device 200 has previously established a communication connection to the first device 100, the second device 200 may automatically establish a communication connection to the first device 100 without authentication information. The second device 200 then enters a wait state in step 910.

The first device 100 supporting communication functions may receive a short message service (SMS) message, a multimedia message service (MMS) message or e-mail message from an external device in step 909. Upon reception of a message, the first device 100 forwards the received message to the second device 200 in step 911. After message forwarding, the first device 100 may remain in await state for the communication service management operation in step 913.

Upon reception of a message from the first device 100, the second device 200 notifies the user of reception of a message in step 912. For message notification, the second device 200 may use the tray icon and output text or an image indicating message reception on the tray icon. Thereafter, the second device 200 generates data and a control event according to checking and answering the received message in step 914, for instance, by a user. The second device 200 sends the generated data and control event to the first device 100 in step 916. Upon reception of the data and control event from the second device 200, the first device 100 sends a message corresponding to the received data and control event to the external device in step 915. Thereafter, to continue the communication service management operation, the first device 100 may return to step 909 and the second device 200 may return to step 910.

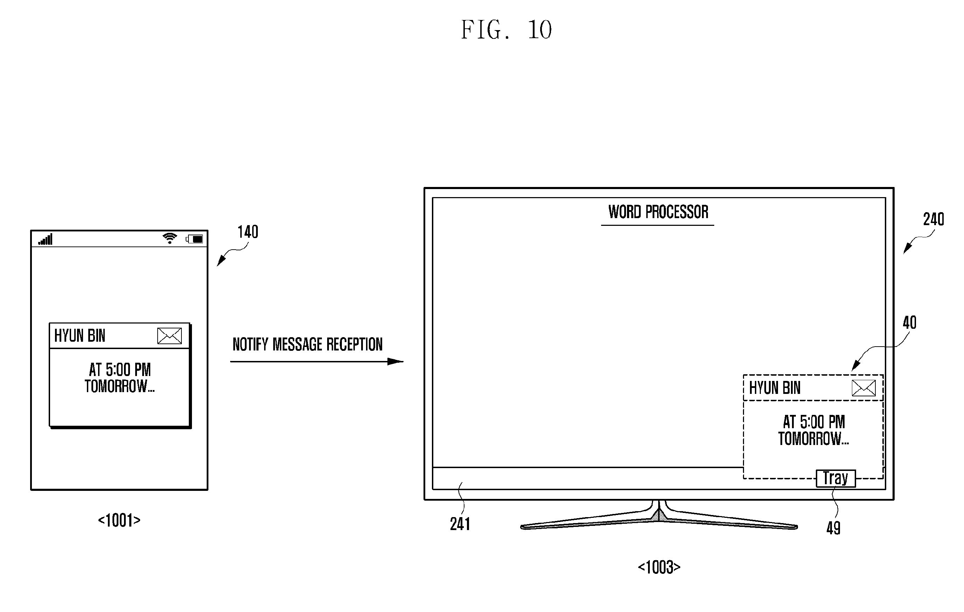

FIG. 10 illustrates screen representations for receiving and handling a message during communication service management according to the exemplary embodiment of the present invention.

Referring to FIG. 10, when an SMS message, a MMS message or an e-mail message containing at least one of characters, text and images is received, the first device 100 may output a notification screen indicating message reception as shown by screen 1001. For example, the first device 100 may output a popup window indicating message reception on a portion of the first display unit 140. When a message is received from an external device, the first device 100 may forward the received message to the second device 200.

Upon reception of a message from the first device 100, the second device 200 may output the received message on a tray icon 40 as shown by screen 1003 on the second display unit 240. Here, the second device 200 may adjust the received message according to a format indicated by the tray icon 40. For example, the second device 200 may display a portion of the message contents so that the displayed portion fits within the size of the tray icon 40. The second device 200 may display the tray icon 40 indicating message reception for a pre-set time and then remove the tray icon 40 from display by the second display unit 240. To persistently notify the user of message reception, the second device 200 may change at least one of the colour or shape of the tray base icon 49. Then, the user may select the tray base icon 49 to check the detailed contents of the message forwarded by the first device 100. When the user selects the tray base icon 49, the second device 200 may display the previous tray icon 40 indicating the message contents on the second display unit 240. Alternatively, the second device 200 may change the size of the tray icon 40 so that the entire message contents can be checked and display the changed tray icon on the second display unit 240. To indicate that the second device 200 performs a communication service management operation while maintaining a communication connection to the first device 100, the tray base icon 49 may be displayed on a predetermined or default portion of the task bar 241, which may be set or changed by the user.

In the above description, when a message is received, the first device 100 outputs a popup window for the received message on the first display unit 140 to notify the user of message reception. However, the present invention is not limited thereto. That is, when the first device 100 performs a communication service management operation while maintaining a communication connection to the first device 100, the first device 100may deactivate the first display unit 140. Accordingly, although a message is received from an external device, the first device 100 may not output the received message separately on the first display unit 140.

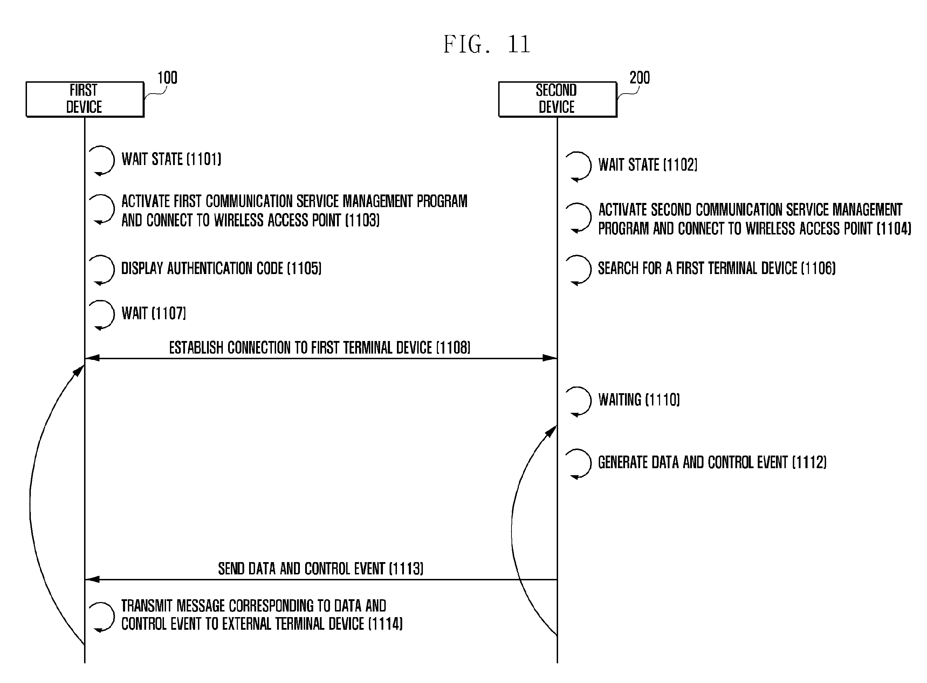

FIG. 11 illustrates a system operation method for generating data in the second device 200 during communication service management according to the exemplary embodiment of the present invention.

Referring to FIG. 11, in a manner similar to the case described in connection with FIG. 9, the first device 100 and second device 200 may establish a communication connection through the wireless access point 300 to support communication service management of the present invention in steps 1101 to 1108.

Thereafter, the second device 200 may remain in the wait state for the communication service management operation in step 1110. During the wait state, the second device 200 may support other functions such as word processing, file editing, moving image playback, still image search and the like. For a text message, a multimedia message or an instant message received from the first device 100, the user may generate data corresponding to an answer to the received message and a control event for transmission of the data in step 1112. The second device 200 sends the generated data and control event to the first device 100 in step 1113.

Upon reception of the data and control event from the second device 200, the first device 100 sends, to an external device, a message according to the received data and control event in step 1114. For example, the first device 100 may generate an instant message containing the received data as contents, and send the instant message to the external device according to the received control event. Here, the control event may act as a command to send the instant message as a reply to an instant message received from the external device. The control event may also act as a command to send a corresponding message as a reply to a call connection request message, a text message or a multimedia message received from the external device. After sending a message according to the data and control event, the first device 100 and second device 200 may return respectively to the wait state for communication service management operation. As described before, during the wait state for the communication service management operation, the first device100may perform a user function according to user manipulation, or await an occurrence of a communication service event or generation of an event by the second device 200 for a function of the first device 100 while in a sleep state. As an alternative, the data and control event generated in step 1112 may not be in response to a message received from the first device 100. that is, the data and control event may be generated without any external trigger, or at the request of the user of the second device 200.

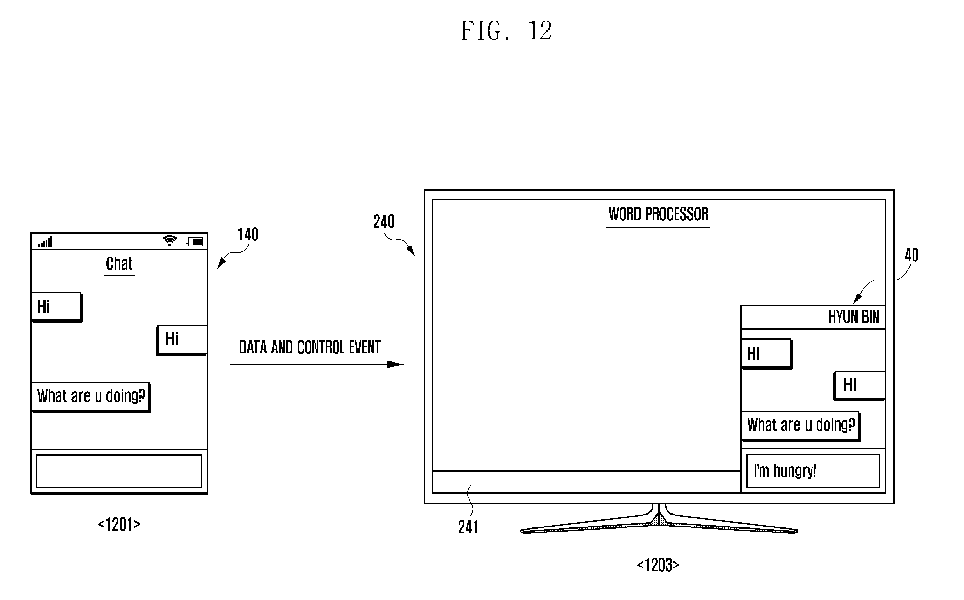

FIG. 12 illustrates example screen representations for generation of data and a control event during communication service management according to the exemplary embodiment of the present invention.

Referring to FIG. 12, the first device 100 may establish an instant messaging channel to an external device to exchange instant messages. The first device 100 may output an instant message screen on the first display unit 140 as shown by screen 1201. When an instant message is received from the external device after messaging channel establishment, the first device 100 may forward the received instant message to the second device 200. The second device 200 may output the received instant message through the tray icon 40, shown on the screen 1203. In this case, the tray icon 40 may receive some of related instant messages from the first device 100 and display the same as previous instant messages. Here, the tray icon 40 may not only notify the user of reception of an instant message but also act as a message composer enabling writing of a message body for a reply message to be transmitted. Hence, the user may use the tray icon 40 to check a message received by the first device 100 and generate data and a control event to reply to the received message.

The first device 100 may receive data related to the instant message and a control event indicating transmission of a reply instant message from the second device 200. Thereafter, the first device 100 may send the external device a reply instant message according to the received data and control event. In FIG. 12, the first device 100 displays a screen 1201 for instant messages. However, during communication service management operation, the first device 100 may deactivate screen output and block a supply of power to the first display unit 140.

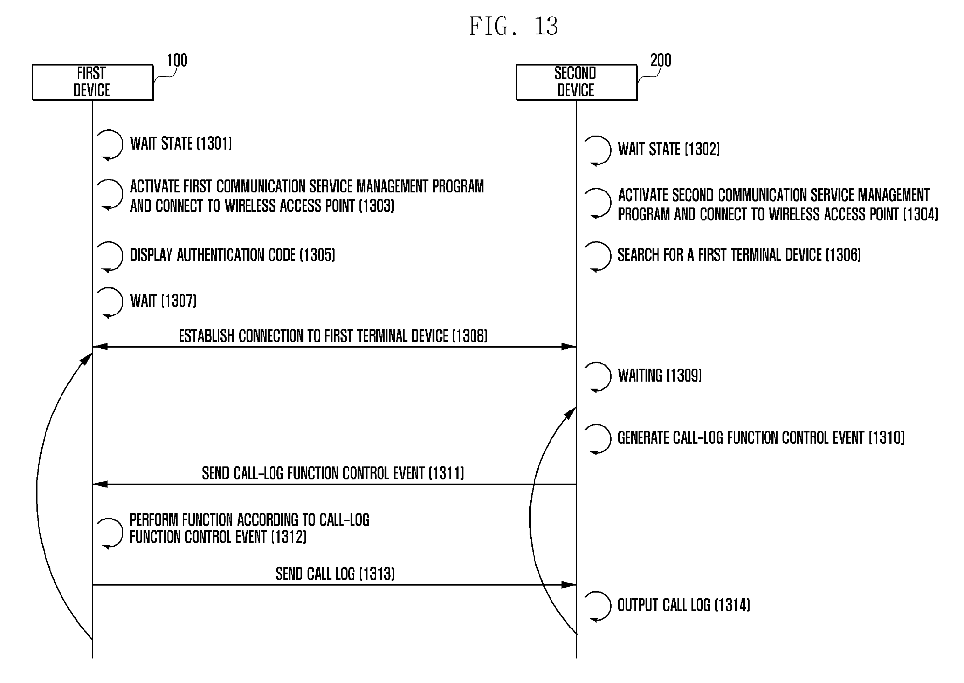

FIG. 13 illustrates a system operation method for handling events related to call log control during communication service management according to the exemplary embodiment of the present invention.

Referring to FIG. 13, in a manner similar to the case described in connection with FIG. 9, the first device 100 and second device 200 may establish a communication connection through the wireless access point 300 in steps 1301 to 1308. Thereafter, the second device 200 may remain in the wait state for the communication service management operation in step 1309. In response to a user request for checking the call log of the first device 100, the second device 200 may provide an interface screen to generate a corresponding function control event. The second device 200 generates a function control event for call log checking in step 1310, and sends the call log function control event to the first device 100 in step 1311. Upon reception of the call log function control event, the first device 100 retrieves the call log 155 from the first storage unit 150 in step 1312. The first device 100 sends the call log 155, retrieved as a result of a function control event, to the second device 200 in step 1313.

Upon reception of the call log 155 from the first device 100, the second device 200 outputs the call log 155 on the second display unit 240 in step1314. In one example embodiment, the second device 200 may only display the received call log 155 without storage, except possibly by transitory storage of such events and data during the outputting or processing. Accordingly, the second device 200 may control a specific function of the first device 100 by generating and sending a function control event. To this end, the second device 200 may provide a list of functions supported by the first device 100.

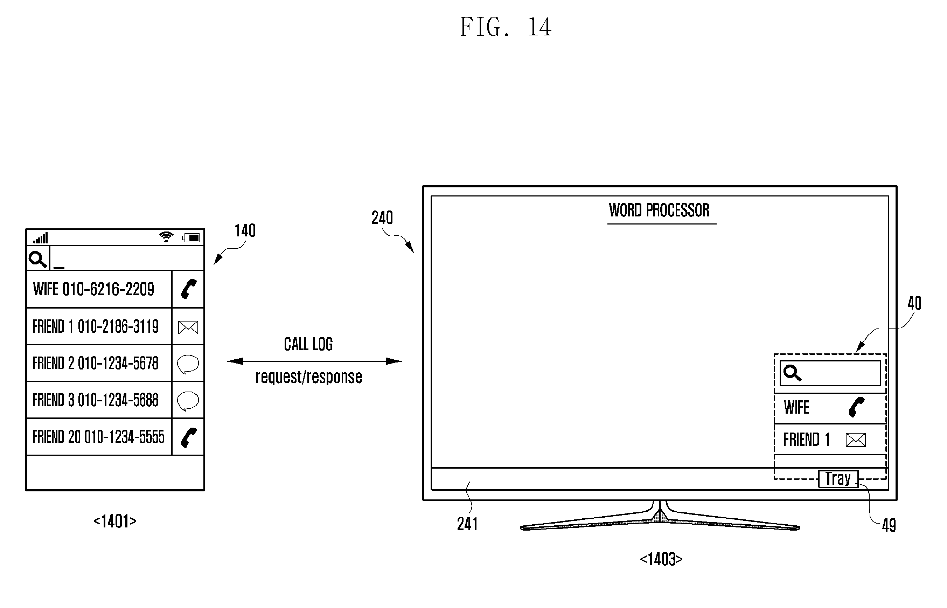

FIG. 14 illustrates screen representations for handling a function control event related to a call log during communication service management according to the exemplary embodiment of the present invention.

Referring to FIG. 14, the second device 200, to perform a user function such as word processing, may output a word processor screen on the second display unit 240. In addition, the second device 200 may perform a communication service management operation with the first device 100 and output a tray base icon 49 indicating the operation on a portion of the second display unit 240. After the first device 100 and second device 200 establish a communication connection for communication service management through steps 1301 to 1308 in FIG. 13, the tray base icon 49 may be displayed on a predetermined or default portion of the screen of the second display unit 240; for example, in the task bar 241 of the second display unit 240. When an input signal is generated for controlling a function of the first device 100, for example, an input signal for activating the tray base icon 49, the second device 200 may output a tray icon 40 containing a list of items associated with controllable functions of the first device 100 on the second display unit 240. When the user selects an item for call log checking from the list, the second device 200 may send a function control event for call log checking to the first device 100.

Upon reception of the call log function control event, the first device 100 may retrieve the call log 155 from the first storage unit 150 and send the retrieved call log 155 to the second device 200. That is, for a call log request from the second device 200, the first device 100 may send, to the second device 200, the call log 155 as a response. In this process, the first device 100 may output the call log 155 on the first display unit 140 as shown by screen 1401. Alternatively, the first device 100 may not output the call log 155 on the first display unit 140 and may only send the call log 155 to the second device 200, for example, through background processing.

Upon reception at the second device 200of the call log 155 from the first device 100, the second device 200 may output some portion or all of the call log 155 through the tray icon 40 as shown by screen 1403. Here, entries of the call log 155 may be adjusted in accordance with the format of the tray icon 40. That is, when the format of the tray icon 40 is identical to the display format for the call log 155 in the first device 100, the second device 200 may output entries of the call log 155 without adjustment. When the format of the tray icon 40 is different from the display format for the call log 155 in the first device 100, the second device 200 may adjust entries of the call log 155 according to the format of the tray icon 40 and output the adjusted entries. The second device 200 may output the tray icon 40 containing call log entries for a pre-set time or a user specified time and then remove the tray icon 40 from the second display unit 240. To notify the user of the continued sustaining of the communication service management operation with the first device 100, the second device 200 may output the tray base icon 49 in a portion of the task bar 241. The user may create a text message or an email message using call log entries output on the tray icon 40, and forward the created message to the first device 100, which may then transmit the message to an external device. That is, the second device 200 may support data and control event processing described in connection with FIG. 11 on the basis of function control event processing described in connection with FIG. 13.

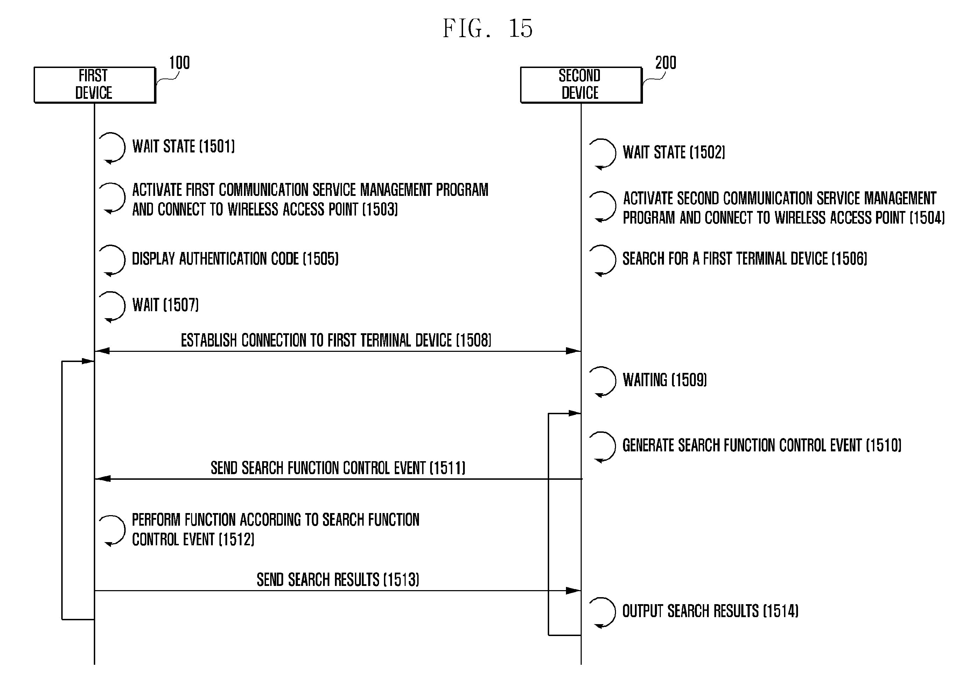

FIG. 15 illustrates a system operation method for handling control events related to a search function during communication service management according to the exemplary embodiment of the present invention.

Referring to FIG. 15, in a manner similar to the case described in connection with FIG. 9, the first device 100 and second device 200 may establish a communication connection through the wireless access point 300 to support communication service management of the present invention in steps 1501 to 1508. Thereafter, the second device 200 may remain in the wait state for the communication service management operation in step 1509. The second device 200 may also support execution of a specific function supported by the first device 100 according to a user control. The second device 200 may generate a function control event for performing a search according to the user control in step 1510. To this end, the second device 200 may output a list of items associated with functions supported by the first device 100 on the second display unit 240. The second device 200 may obtain a list of functions supported by the first device 100 from the first device100. When the user selects a search function item from the list of items, the second device 200 may provide an interface screen for a search function. When the user enters a search word to find specific information from information stored in the first device 100, the second device 200 generates a search function control event containing the entered search word. The second device 200 sends the generated search function control event to the first device 100 in step 1511.

Upon reception of the search function control event, the first device 100 may perform a function corresponding to the search function control event in step 1512. That is, the first device 100 may perform a search using the search word supplied by the user and collect corresponding search results. The first device 100 sends the search results to the second device 200 in step 1513. The second device 200 outputs the received search results on a portion of the screen in step 1514. In particular, the second device 200 may output the received search results on the tray icon 40 displayed by the second device 200 as described herein.

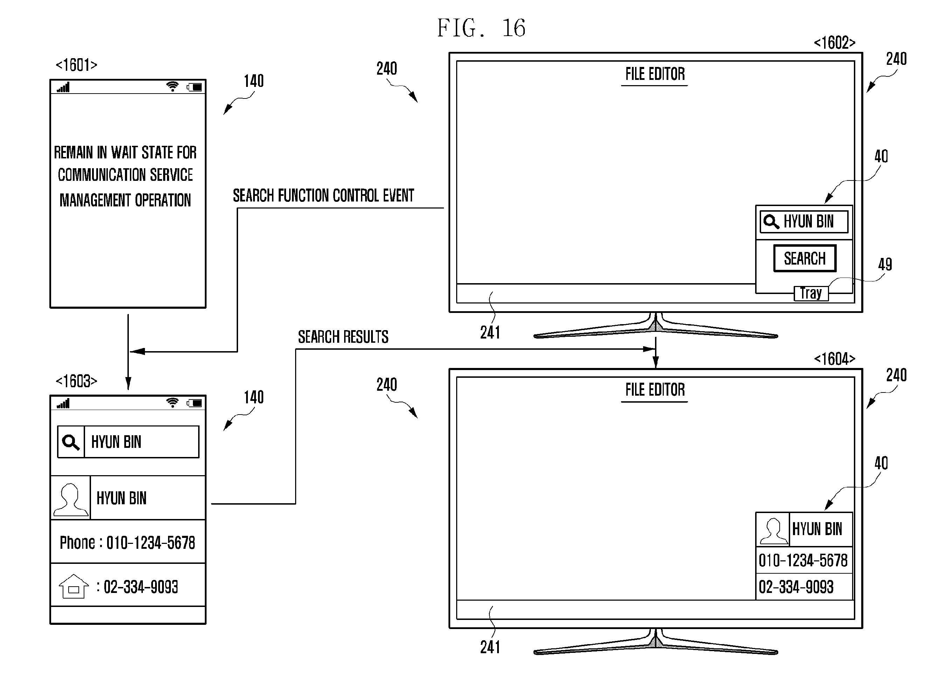

FIG. 16 illustrates example screen representations for handling a function control event related to a search during communication service management according to the exemplary embodiment of the present invention.

Referring to FIG. 16, the first device 100 may remain in the wait state for communication service management operation with the second device 200 as shown by the screen 1601. During the wait state, the first device 100 may wait for an event sent by an external device or the second device 200 while maintaining a communication connection with the second device 200 through the wireless access point 300. The first device 100 may reduce power consumption in the wait state indicated by the screen 1601 by blocking a supply of power to the first display unit 140.

The second device 200 may perform a user function such as file editing according to user control while outputting a tray base icon 49 at the task bar 241, as shown in screen 1602, to indicate performance of communication service management operation. The second device 200 may display a file editor screen on the second display unit 240 as shown by screen 1602. To handle a search request for a function of the first device 100 from the user, the second device 200 may output a tray icon 40 supporting a search function or output a search window for controlling a function of the first device 100 in a region associated or not associated with the tray base icon 49, as shown in screens 1602 and 1604, respectively. As described before, for selection of a function of the first device 100, the second device 200 may output a function list screen for the first device 100 and output the tray icon 40 to support a function selected from the function list screen. Here, the function list screen for the first device 100 may be provided through the tray icon 40 or through a separate popup window or menu window. For example, when the user clicks the tray base icon 49 in the screen 1602, a function list screen for the first device 100 may be output as a tray icon 40 in the screen 1602; and when an item for a search function is selected from the function list screen, the tray icon 40 for supporting a search function may be provided as shown by screen 1602. The user may enter a search term using the tray icon 40. When a search term is entered, the second device 200 may generate a search function control event containing the search term and send the search function control event to the first device 100.

Upon reception of the search function control event from the second device 200, the first device 100 may extract a search term from the search function control event, activate a corresponding search function using the search term, and collect search results. The first device 100 may output the search results corresponding to the search term as shown by screen 1603. For example, in the event that the search function control event is related to finding a specific entry in the phonebook 153, the first device 100 may search the phonebook 153 using the search term and output the search results on the first display unit 140 as shown by screen 1603. Here, to reduce power consumption during communication service management operation, the first device 100 may suppress the display operation of the first display unit 140 by blocking or not providing a supply of power thereto. After completion of the search operation, the first device 100 may send the found phonebook entry as a search result to the second device 200.

Upon reception of a search result from the first device 100, the second device 200 outputs the search result on the second display unit 240. Here, the second device 200 may output the search result using the full screen of the second display unit 240 or may output the same at a limited region and location using the tray icon 40, shown in the screen 1604. Hence, in the present invention, the communication service management operation may be processed in such a manner that the user performing a task using the second device 200 is not disturbed. Alternatively, output in a full screen mode may be used to suppress additional control actions such as screen movement and screen control.

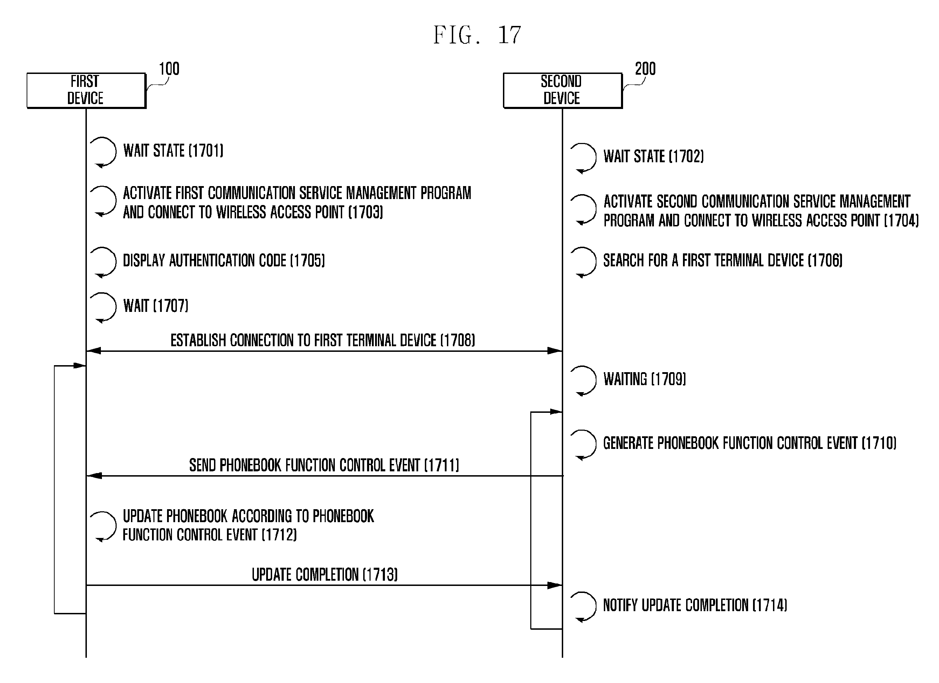

FIG. 17 illustrates a system operation method for handling control events related to phonebook data during communication service management according to the exemplary embodiment of the present invention.

Referring to FIG. 17, the first device 100 and second device 200 may establish a communication connection to support communication service management of the present invention in steps 1701 to 1708. Thereafter, the second device 200 may remain in the wait state for communication service management operation in step 1709. The second device 200 may generate a function control event for a phonebook according to a user control in order to add new contact information to the phonebook or to delete or modify existing contact information from or in the phonebook in step 1710. To this end, the second device 200 may provide menu items for phonebook control through the second display unit 240, in particular, through the tray base icon 49 or the tray icon 40 after selection of the tray base icon 49, as described herein. The second device 200 may also provide an interface screen for entering new contact information or an interface screen for deleting or modifying a phonebook entry. After generation of the phonebook function control event, the second device 200 may send the phonebook function control event to the first device 100 in step 1711.

Upon reception of the phonebook function control event from the second device 200, the first device 100 may perform a function indicated by the phonebook function control event. To this end, the first device 100 may retrieve the phonebook 153 from the first storage unit 150, and add a phonebook item contained in the received phonebook function control event to the phonebook 153 or remove or modify specific information from or in the phonebook 153. That is, the first device 100 may update the phonebook 153 according to the phonebook function control event in step 1712.

After the phonebook update, the first device 100 may send an update completion message to the second device 200 in step 1713. The second device 200 may notify reception of the update completion message through the second display unit 240 in step 1714.

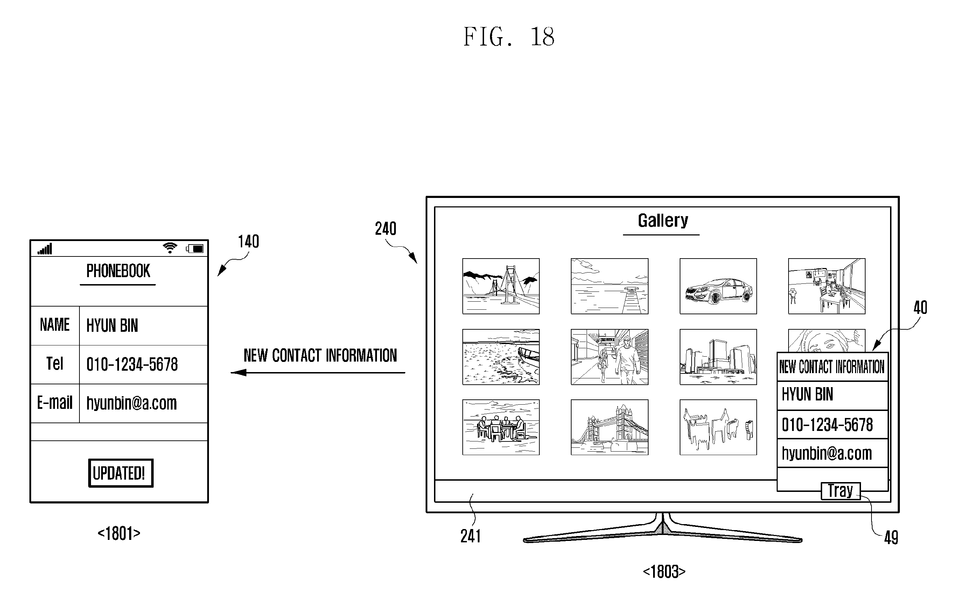

FIG. 18 illustrates example screen representations for handling a function control event related to a phonebook during communication service management according to the exemplary embodiment of the present invention.

Referring to FIG. 18, the second device 200 may execute a user function such as a "gallery" function to display a plurality of images in an array or gallery format. At the same time, the second device 200 may output a tray base icon 49 at the task bar 241 in the screen 1803 to indicate performance of a communication service management operation with the first device 100. In response to a user request for adding new contact information to the phonebook 153 of the first device 100, the second device 200 may output an interface screen for contact information addition in a portion of the screen in a form of the tray icon 40 as shown by screen 1803. The user may enter a name, phone number, email address and the like as new contact information using the tray icon 40. Thereafter, the second device 200 may generate a phonebook function control event containing the new contact information and send the phonebook function control event to the first device 100.

Upon reception of the phonebook function control event from the second device 200, the first device 100 may extract function information and contact information from the phonebook function control event and apply the function to the phonebook 153 stored in the first storage unit 150 using the extracted contact information. Then, the first device 100 may output a phonebook update screen on the first display unit 140 as shown by screen 1801. As described before, the first device 100 may optionally not display a phonebook update screen. After the phonebook update, the first device 100 may notify the second device 200 of update completion, which may then output an update completion notification message on the second display unit 240.

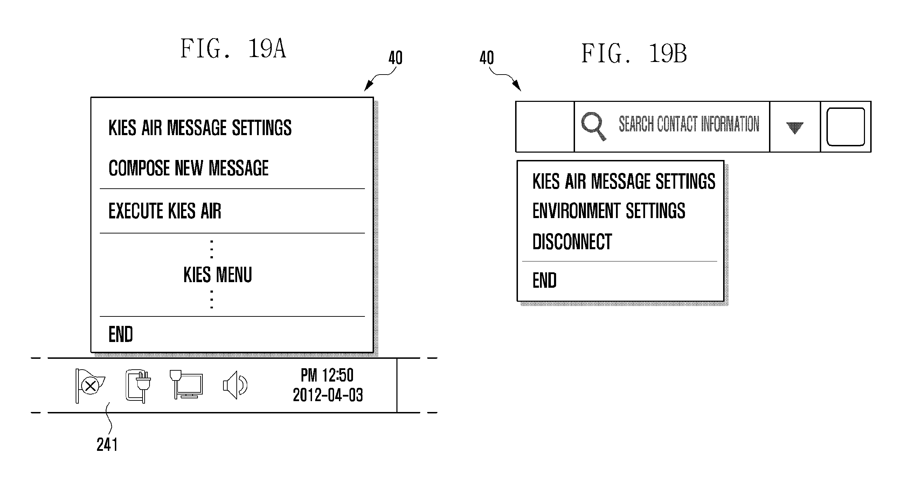

The tray icon 40 described above may also be provided in a form shown in FIGS. 19A-19B. More specifically, as shown by the screen portion in FIG. 19A, the tray icon 40 output by the second device 200 may be configured to include items for messaging program execution, new message composition, management function execution, a menu, and a termination in relation to function control events for the communication service management operation of the present invention. When the messaging program execution item related to a function control event is activated, the second device 200 may display an event generation item for generating a function control event to be sent to the first device 100 such as a contact information search, an environment setting item, a disconnection item, and a termination item for ending the messaging program, as shown by the screen portion in FIG. 19B.

Embodiments of the present invention described above refer to information being displayed by the second device within a tray icon or a tray base icon. The term tray icon may refer to any icon or other type of screen interface which is relatively unobtrusive and takes up only part of the screen such that a user can ignore the displayed icon and continue to use another application, if so desired. Additionally, the tray icon or the tray base icon may be arranged to appear within, or proximal to, a system tray, which contains other icons displaying device or application status information. However, it will be appreciated that the present invention is not limited to the use of a tray icon or a tray base icon. Any form of screen interface, such as an icon, menu, popup window or similar, may be used to display information or to provide access to functions for controlling the first device or information received from the first device. Indeed, in certain other embodiments, information may not be displayed by the second device, or may not solely be displayed. For instance, a communication service event received by the second device from the first device may be output audibly. Further methods of interacting with the second device to output information and receive instructions will be readily apparent to those skilled in user interface systems.

The communication service management of the present invention may be summarized as follows. The present invention enables the second device 200 to check notifications related to various functions of the first device 100 and to perform processing according to the notifications or to control functions of the first device 100. Thereby, through the second device 200, the user may easily control a function of the first device 100 and check and handle a communication service event occurring in the first device 100 in real-time without regard to the location of the first device 100, such as when the first device 100 is relatively remote from the user using the second device 200. In addition, in the present invention, the first device 100 may act as a server and the second device 200 may act as a client, and the second device 200 accesses a database of the first device 100 to control functions and handle messages such as reception, transmission, deletion, editing or the like. When a message is received, the first device 100 may provide the second device 200 with the sender name and a portion of the message body; and the second device 200 may output the received message information in a popup window or using the tray icon 40 as described before. Here, the second device 200 may support composition and transmission of a response message as described before. Additionally, the second device 200 may attach a file to the response message. To this end, the second device 200 may provide an interface screen corresponding to a file attachment box or a popup input or menu window. As described above, the second device 200 accesses information stored in the first device 100 to support a phonebook, a call log, and message related functions, such as a contact information search, addition and modification of contact information, call log or recent contact record viewing, and message searching, composition and file attachment. Hence, the second device 200 does not have to store information already stored in the first device 100 other than connectivity information for the communication service management operation, increasing storage efficiency and reducing operating and component requirements of the second device 200. In addition, after establishing a connection to the first device 100, the second device 200 may maintain unique and/or secure information of the first device 100;for example, a media access control (MAC) address. Later, the second device 200 may easily establish a connection to the first device 100 through an automatic search.

In the above description, the tray icon 40 is depicted as being temporarily displayed on the second display unit 240. However, the present invention is not limited thereto. That is, the tray icon 40 may be displayed on the second display unit 240 at a fixed location in a fixed size, and may be displayed for a fixed time, or may always be displayed, with the location, size, and duration of display being set, for example, by user settings.

Each of the first device 100 and second device 200 may further include various components according to design and implementation by the user and/or by the manufacturer of the devices 100, 200. That is, each device100, 200 may further include a short-range communication module for short-range communication, a data communication interface based on wired and/or wireless communication, an Internet communication module for Internet access, and a digital broadcast receiving module for playing digital broadcasts. With the trend towards digital convergence, it should be apparent to those skilled in the art that each device100, 200 may further include any known unit comparable to the above-described units, and, in various configurations, one unit of each device 100, 200 may be removed or replaced with another unit.

Each device100, 200 of the present invention may be any known information and communication appliance or multimedia appliance, such as a mobile communication terminal based on communication protocols supporting various communication systems, a portable multimedia player (PMP), a digital broadcast receiver, a personal digital assistant (PDA), a music player such as an MP3 player, a portable game console, a smart-phone, a laptop computer, or a handheld computer.

The above-described apparatus and methods according to the present invention can be implemented in hardware or firmware, or as software or computer code, or combinations thereof. In addition, the software or computer code can also be stored in a non-transitory recording medium such as a CD ROM, a RAM, a ROM whether erasable or rewritable or not, a floppy disk, CDs, DVDs, memory chips, a hard disk, a magnetic storage media, an optical recording media, or a magneto-optical disk or computer code downloaded over a network originally stored on a remote recording medium, a computer readable recording medium, or a non-transitory machine readable medium and to be stored on a local recording medium, so that the methods described herein can be rendered in such software, computer code, software modules, software objects, instructions, applications, applets, apps, etc. that is stored on the recording medium using a general purpose computer, a digital computer, or a special processor or in programmable or dedicated hardware, such as an ASIC or FPGA. As would be understood in the art, the computer, the processor, microprocessor controller or the programmable hardware include volatile and/or non-volatile storage and memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, the program may be electronically transferred through any medium such as communication signals transmitted by wire/wireless connections, and their equivalents. The programs and computer readable recording medium can also be distributed in network-coupled computer systems so that the computer readable code is stored and executed in a distributed fashion.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Hereinabove, exemplary embodiments of the present invention have been described with reference to the accompanying drawings. Specific terms or words used in the description should be construed in accordance with the spirit of the present invention without limiting the subject matter thereof. It should be understood that many variations and modifications of the basic inventive concept described herein will still fall within the scope of the present invention as defined in the appended claims.

## Claims

1. A communication service management system comprising:
A first device arranged to support communication services;
a second device arranged to connect to the first device, to receive a communication service event from the first device, and to output the received communication service event to control the communication services of the first device; and
an access point arranged to interconnect the first and second devices.

2. The communication service management system of claim 1, wherein the first device is further arranged to receive at least one of a call connection request message, a text message, a multimedia message, an email message and an instant message from an external device, and to forward the received message to the second device;
wherein the first device is further arranged to receive from the second device a function control event for a function provided by the first device, to execute the function according to the received function control event, and to send an execution result to the second device; or
wherein the first device is further arranged to receive from the second device data containing a message and a control event controlling transmission of the data, to compose a message in response to the received message, and to transmit the composed message according to the control event.

3. The communication service management system of claim 2, wherein the function control event is for retrieving a call log, and the first device is further arranged to send the call log indicated by the function control event to the second device;
wherein the function control event is for an information search, and the first device is further arranged to send to the second device the results of an information search performed according to the function control event; or
wherein the function control event indicates at least one of addition, deletion and modification of a phonebook entry, and the first device is further arranged to update a phonebook stored in a storage unit according to the function control event.

4. The communication service management system of any one of the preceding claims, wherein the second device is further arranged to output an indication of at least one of a state of the communication connection to the first device, an operation state of the first device, and a notification as to reception of a communication service event on a portion of a screen of the second device.

5. The communication service management system of claim 4, wherein the second device is further arranged to display the indication as an icon within a task bar.

6. The communication service management system of claim 4 or claim 5, wherein the second device is further arranged to display at least one of a screen interface for displaying the communication service event sent by the first device, a screen interface for answering or handling the communication service event, and a screen interface for generating a function control event for controlling a function of the first device.

7. An operation method for a communication service management system, comprising:
connecting a first device supporting communication services to a second device through an access point;
sending, by the first device, a communication service event to the second device; and
receiving, by the second device, the communication service event from the first device; and
outputting, by the second device, the received communication service event to control the communication services of the first device.

8. The operation method of claim 7, further comprising:
receiving, by the first device from the second device, data containing a message and a control event controlling transmission of the data;
composing, by the first device, a message in response to the received message; and
transmitting the composed message according to the control event.

9. The operation method of claim 7 or claim 8, wherein sending a communication service event comprises:
receiving, by the first device, at least one of a call connection request message, a text message, a multimedia message, an email message and an instant message from an external device, and
forwarding, by the first device, the at least one received message to the second device.

10. The operation method of any one of claims7 to9, wherein conducting event processing comprises:
receiving, at the first device, a function control event from the second device for a function provided by the first device;
executing, by the first device, the function according to the received function control event; and
sending, by the first device, an execution result to the second device.

11. The operation method of claim 10, wherein the function control event is for retrieving a call log, and the method further comprises sending, by the first device, the call log indicated by the function control event to the second device;
wherein the function control event is for an information search, and the method further comprises sending, from the first device to the second device, results of an information search performed according to the function control event; or
wherein the function control event indicates at least one of addition, deletion and modification of a phonebook entry, and the method further comprises updating, by the first device according to the function control event, a phonebook stored in a storage unit.

12. The operation method of any one of claims7 to 11, further comprising outputting, by the second device, an indication of at least one of a state of the communication connection to the first device, an operation state of the first device, and a notification as to reception of a communication service event on a portion of the screen of the second device.

13. The operation method of claim 12, wherein the second device is further arranged to display the indication as an icon within a task bar.

14. The operation method of claim 12 or claim 13, further comprising displaying, by the second device, at least one of a screen interface for displaying the communication service event sent by the first device, a screen interface for answering or handling the communication service event, and a screen interface for generating a function control event for controlling a function of the first device.

15. The operation method of claim 14, wherein the second device is arranged to display the screen interface in a region related or unrelated to a region in which the indication is displayed.
